(19) Europäisches Patentamt / European Patent Office / Office européen des brevets

(11) **EP 4 379 653 A1**

(12) **EUROPEAN PATENT APPLICATION**

(43) Date of publication:
**05.06.2024 Bulletin 2024/23**

(21) Application number: **22210429.1**

(22) Date of filing: **30.11.2022**

(51) International Patent Classification (IPC):
**G06T 7/00** $^{(2017.01)}$     **G06T 15/50** $^{(2011.01)}$

(52) Cooperative Patent Classification (CPC):
**G06T 7/97; G06T 15/506;** G06T 2207/10024;
G06T 2207/30221; G06T 2215/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventor: **VAREKAMP, Christiaan
5656AG Eindhoven (NL)**

(74) Representative: **Philips Intellectual Property &
Standards
High Tech Campus 52
5656 AG Eindhoven (NL)**

(54) **HANDLING REFLECTIONS IN MULTI-VIEW IMAGING**

(57)    A method is provided for removing reflections from an image. Images of a scene and a geometry of the scene are obtained. For observed pixels in an image, the observed pixels are adapted by identifying corresponding pixels in other images which correspond to the same positon in the scene as the observed pixel, identifying light source pixels, corresponding to positions in the scene at which a light source is delivering light to the position in the scene which corresponds to the observed pixel and the corresponding pixels, and analyzing the texture values of the observed pixel, and corresponding pixels, and the light source pixels, to obtain an adapted texture value with reflections removed for the observed pixel.

FIG. 7

**Description**

FIELD OF THE INVENTION

The invention relates to the field of handling reflections in images. In particular, the invention relates to removing reflections from an image and synthesizing images at novel viewpoints with appropriate reflections.

BACKGROUND OF THE INVENTION

Indoor scenes, such as a sports hall, often exhibit a highly reflective ground surface. This causes problems for automatic 3D scene reconstruction from cameras and for re-rendering. The reflections specifically hamper the representation of the ground surface as a single textured plane. Existing texturing techniques fail to deal with reflections and often produce unnatural looking synthesis artefacts as a result.

A commonly known solution is to use a polarization sheet in front of the lens of a camera in order to block the reflected light which is typically polarized due to the reflection. However, polarizers are not always used on the cameras.

Another solution could be just to use multi-view depth estimation but treat reflections separately. However, while a reflection can be assigned a meaningful depth value, (i.e., the depth of the light source from which light is reflected), the appearance changes rapidly as a function of viewing angle making it difficult to estimate interpolated and extrapolated view images.

As such, there is a need for an improved method of handling reflections, particularly for multi-view imaging.

SUMMARY OF THE INVENTION

The invention is defined by the claims.

According to examples in accordance with an aspect of the invention, there is provided a method for removing reflections from an image, the method comprising:

> obtaining two or more images of a scene from one or more image sensors;
> obtaining a geometry of the scene providing the positions in the scene corresponding to the pixels in the images; and
> for one or more observed pixels in the images, adapting the values of each observed pixel by:
>
> > identifying corresponding pixels in the other images which correspond to the same positon in the scene as the observed pixel;
> > identifying light source pixels, corresponding to positions in the scene at which a light source is delivering light to the position in the scene which corresponds to the observed pixel and the corresponding pixels, by using the geometry of the scene and the positions of the image sensors relative to the positions of the observed pixels and the corresponding pixels; and
> > analyzing texture values of the observed pixel, and the corresponding pixels, and the light source pixels, to obtain an adapted texture value with reflections removed for the observed pixel.

The two or more images obtained may be obtained from image sensors at different positions in the scene. Alternatively, the images could be obtained at different times from the same position or different color bands could be used from an image.

Certain objects (e.g. polished floors) often reflect a large amount of light. This causes the object to appear a different color than it really is when it is being imaged. In multi-view imaging, these reflections cause problems during rendering (e.g. they cause artefacts on the rendered reflective surface). In particular, when rendering a multi-view frame at a target viewpoint, the reflections from the different images used will all correspond to reflections from different viewpoints and the resulting image will contain an unnatural mix of the reflections.

It has been found that these reflections can be removed when two or more images of the same scene, taken from different viewpoints, are used. In particular, this is possible when the image sensors used to obtain the images are placed at different positions relative to each other. This is a common occurrence in multi-view imaging and thus the conventional workflow for multi-view imaging can be used.

The idea is that each captured image (from a different viewpoint) will contain a different reflection. These reflections are caused by background light sources, which may be light emitting objects or surfaces which reflect light towards the object, and the light is then then reflected (or further reflected) towards the image sensor. The light source (where "light source" is used to denote active or passive light generation as explained above) causing these reflections can be identified using geometry as the position of the camera is known and the geometry of the scene is also known (e.g. from depth maps and/or point clouds in multi-view imaging). In particular, the angle of reflection will be the same from the observed pixel to the camera as from the observed pixel to the light source.

Thus, the color of a light source causing the reflection can be found. The color of the pixel with the reflection can be assumed to be a combination of the original color of the object in the scene and the color of the light source which has been reflected. How these colors (i.e. texture values) are combined depends on the reflectivity of the object, which will generally be unknown.

However, having different images of the same object from different viewpoints provides different levels of reflection for the same parts of the object. As such, other observed pixels (from other images) can be identified which correspond to the same position as the observed pixel. The original color of the object and its reflectivity will be the same for all the other observed pixels. As such, various simultaneous equations containing two unknowns can be constructed from the different images and used to solve for the original color of the object. The texture values of the observed pixel, and the other observed pixels, can thus be adapted to correspond to the original color of the object (i.e. with reflections removed).

Adapting each observed pixel may further comprise tracing rays from the position of the image sensors to the corresponding observed pixel or the corresponding pixels and simulating the reflection of the rays from the observed pixels or the corresponding pixels. Identifying light source pixels for the observed pixel and the corresponding pixels thus comprises identifying the one or more pixels intersected by the reflected rays.

For example, the rays may be traced from the position of the image sensor to a simulated ground surface. The ground surface could, for example, be a plane estimated for the ground of the scene. The observed pixel may be an arbitrary pixel on the ground surface. In other words, the observed pixel may be a pixel which is intersected by the ray from the image sensor.

Once the ray has intersected the ground surface, a reflection of the ray from the observed pixel may be simulated. It will be appreciated that simulating the reflection of a ray typically means reflecting the ray with the same incident angle. The pixel of an object which is intersected by the reflected ray can thus be labelled as the light source pixel. For example, the color of a background pixel may be reflected on the ground surface and thus the background pixel would be treated as a light source.

Adapting each observed pixel may further comprise analyzing the texture values of one or more pixels, adjacent to the observed pixel, and the corresponding light source pixels, together with the observed pixel of the same image, with the assumption that the adjacent pixels comprise similar visual properties as the observed pixel.

In some cases it may be found that more than one light source causes reflections on an observed pixel. This may increase the number of unknowns, thereby meaning that more information may be needed to solve for the original texture of the object. As such, adjacent pixels can be used. The adjacent pixels are close enough to the observed pixel that the reflectivity of the adjacent pixels can be assumed to be the same as that of the observed pixel. Thus, the information of such pixels, together with the corresponding light source pixels identified in the same way as for the observed pixel, can be used to help solve for the original texture.

Identifying light source pixels may comprise identifying specular light source pixels corresponding to positions in the scene at which a light source is delivering light to the position in the scene which corresponds to the observed pixel, and corresponding pixels, and said light is being reflected to the position of the corresponding image sensor and identifying non-specular light source pixels adjacent to, or near, the light source pixels, wherein the non-specular light source pixels correspond to positions in the scene at which a light source is delivering light to the position in the scene which corresponds to the observed pixel and said light is expected to be diffused towards the position of the corresponding image sensor, wherein analyzing the texture values of the light source pixels comprises analyzing the texture values of both the specular light source pixels and the non-specular light source pixels.

Specular reflections assume the same reflection angle after the light is reflected. However, non-specular reflection can also occur if the object is not a perfect mirror. Non-specular reflection occurs when the light is diffused when it is reflected and thus a "cone" of light is reflected instead of a straight ray of light.

Non-specular reflections can be dealt with by assuming that the observed pixel reflects light from a group of pixels (i.e. the non-specular light source pixels) which are near the light source.

Additionally, the amount of light reflected from each of the non-specular light source may be weighted (e.g. using a Gaussian function) such that the further the non-specular light source is from the light source pixel, the lower the contribution from the non-specular light source pixel to the texture value of the observed pixel.

Obtaining the geometry of the scene and the position of the image sensors may comprise using a structure from motion algorithm on the two or more images.

Obtaining a geometry of the scene may comprise iteratively fitting one or more surfaces to one or more objects present in the two or more images.

Obtaining the geometry of the scene may comprise obtaining depth measurements of the scene from one or more depth sensors. For example, time-of-flight sensors, structured light sensors etc. may be used as depth sensors.

The method may further comprise generating an object texture for an object in the scene using the adapted texture values of the observed pixels corresponding to the object.

The method may further comprise generating a reflectivity map for the object based on the texture values of the observed pixels compared to the corresponding adapted texture values.

The method may further comprise transmitting the object texture and the reflectivity map for virtual view synthesis.

The object texture and the reflectivity map can be used to render the scene with new, accurate reflections. This is because the object texture will not contain any view-dependent reflections and thus warping it to a target viewpoint will not generate artefacts due to view-dependent reflections. Thereafter, the appropriate reflections (i.e. from the target viewpoint) can be added as the reflectivity values of the object will be known.

Virtual view synthesis involves the synthesis of a novel image at a distinct virtual viewpoint.

A bitstream may comprise one or more object textures corresponding to one or more objects in a scene, a reflectivity value for at least one of the object textures and a geometry of the scene, the object textures and the geometry being suitable for synthesizing a novel image at a distinct virtual viewpoint.

The invention also provides a method for synthesizing an image at a target viewpoint, the method comprising:

receiving a first object texture, a reflectivity value for the first object texture and a second object texture, wherein the first and second object textures correspond to objects in a scene;
receiving a geometry of the scene including the first and second object textures;
synthesizing the image with the first and second object textures at the target viewpoint using the geometry of the scene;
simulating reflections on the first object texture based on the reflectivity value and the texture values of the second object texture; and
receiving a third object texture and adding the third object texture over the first object texture with simulated reflections to synthesize the image at the target viewpoint.

The method may further comprise receiving a reflectivity map comprising a plurality of reflectivity values for the plurality of pixels of the first object texture.

The method may further comprise simulating reflections on the first object texture based on the reflectivity value and the texture values of the third object texture.

Simulating reflections may comprise tracing a ray from the position of the target viewpoint to a pixel on the first object texture, simulating the reflection of the ray from the first object texture, identifying a pixel on the second (or third) object texture intersected by the reflected ray and adapting the texture value of the first object texture based on the texture value of the intersected pixel. Simulating the reflection of the ray may be based on specular and/or non-specular reflections.

The invention also provides a computer program product comprising computer program code which, when executed on a processor, cause the processor to perform all of the steps of the afore-mentioned methods.

The invention also provides a processor configured to execute the afore-mentioned computer program code.

The invention also provides a computer-readable data carrier carrying the afore-mentioned computer program code.

For example, the computer-readable data carrier may be a storage medium carrying (i.e. storing) the computer program code or a bitstream/signal carrying the computer program code.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows a cross section of a scene;
Fig. 2 shows an image of the scene of Fig. 1;
Fig. 3 illustrates how a given point on the ground surface is imaged by two cameras;
Fig. 4 shows a cross section of a scene with three candidate background walls;
Fig. 5 shows a cone of possible trajectories of light diffused at the ground surface;
Fig. 6 shows an image with a specular light source pixel and multiple non-specular light source pixels on the background wall; and
Fig. 7 shows a method for removing reflections from an image.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for removing reflections from an image. Images of a scene at different viewpoints and a geometry of the scene are obtained. For observed pixels in an image, the observed pixels are adapted by identifying other pixels in other images which correspond to the same positon in the scene as the observed pixel, and identifying light source pixels, corresponding to positions in the scene at which a light source is delivering light to the position in the scene which corresponds to the observed pixel and said other pixels. The texture values of the observed pixel, said other pixels, and the light source pixels are analyzed to obtain an adapted texture value with reflections removed for the observed pixel.

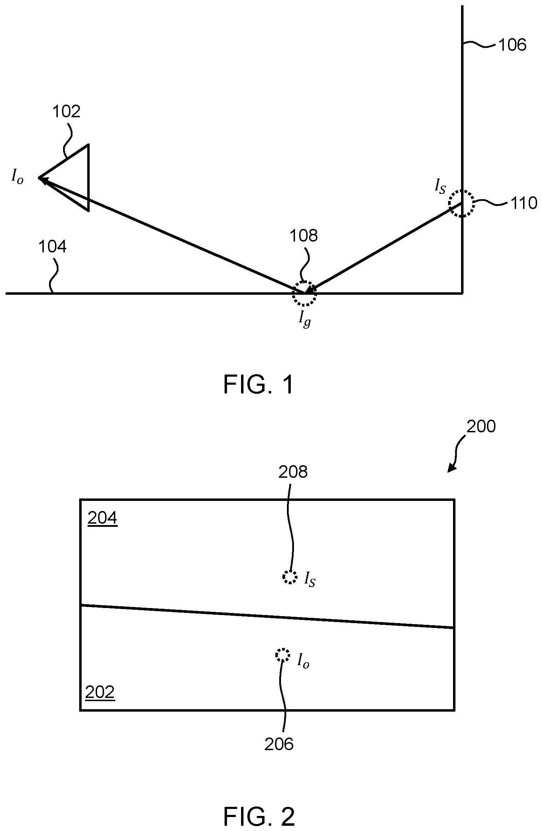

Fig. 1 shows a cross section of a scene. Light from the background wall 106 is, for example, reflected towards the ground surface 104. Some of the light reflected from the ground surface 104 will reflect towards an image sensor 102, i.e. a camera. As such, the color ($I_o$) of the ground surface 104 at position 108 will appear, at the position of the camera, as some combination between the real color of the ground surface 104 at position 108 ($I_g$) and the color of the background surface 106 at position 110 ($I_s$).

Thus, it is proposed to remove the reflections from the textured 3D surface (i.e. the imaged surface) via the identification of the pixels in the images from the camera 102 that caused the reflections in the image.

Fig. 2 shows an image 200 of the scene of Fig. 1. The texture/color of the background wall 204 and the ground surface 202 can be seen in the image 200. Prior knowledge of the scene's geometry is used to identify the pixel in the source view image 200 that is likely to be the light emitter that causes the reflection for a given pixel that images a point on the reflective ground surface 202. For example, knowledge of the geometry of the ground surface 202 relative to the background wall 204 (as illustrated in Fig. 1) can be used to identify the light source pixels. In this case, for the observed pixel $I_o$, the light source pixel $I_s$ has been identified.

Given the color value of the light source pixel $I_s$ and the observed color value of the reflecting surface pixel $I_o$, a reflection model can be formulated. The reflection model aims to estimate the color of the ground surface 202 without reflections by asserting that the color of the observed pixel $I_o$ is a combination of the color of the ground surface $I_g$ and the color of the light source pixel $I_s$ weighted based on the reflectivity $\alpha$ of the ground surface:

$$I_0 = \alpha I_g + (1 - \alpha)I_s \qquad (1)$$

Thus, there are two unknowns: $\alpha$ and $I_g$. However, in multi-view imaging, there are typically multiple cameras imaging the same scene from different viewpoints. This enables the geometry of the scene to be obtained from the images of the scene. However, it has been realized that having multiple images of the scene from different viewpoints also enables the reflections to be removed from the images.

Since the multiple cameras view the same surface point, model equations can be combined across cameras. In fact, a closed-form solution of the ground surface color results when using two cameras. More cameras can help to calculate a robust solution that also can deal with uncertainty in the position of the light source pixels. The inferred reflection properties can be transmitted to a client device such that during rendering reflections can (optionally) be re-rendered.

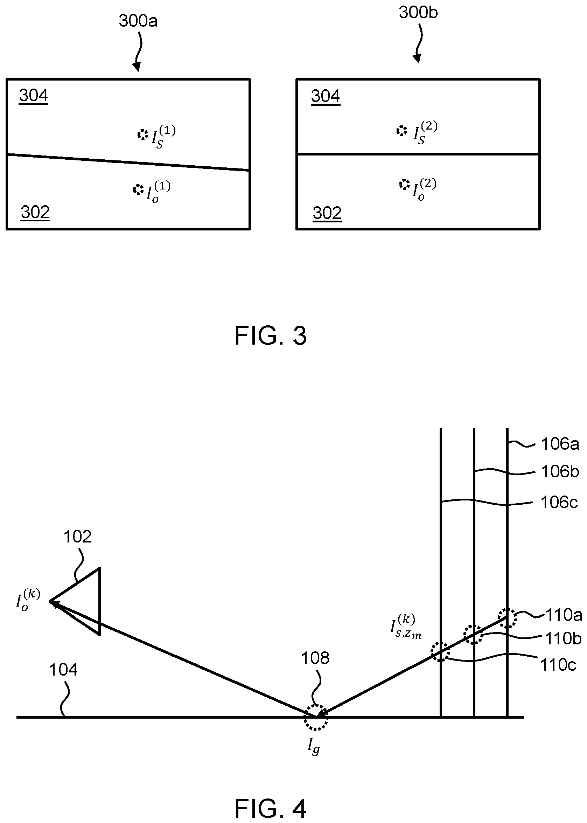

Fig. 3 illustrates how a given point on the ground surface 302 is imaged by two cameras. The two images 300a and 300b are of the same scene from different viewpoints. Due to the different viewpoints, each camera sees the reflection of a different light source, from the background wall 304, on the same point on the ground surface 302. The first image 300a shows the reflection of light source pixel $I_s^{(1)}$ whereas the second image 300b shows the reflection of light source $I_s^{(2)}$. Thus, the reflection model shown in equation (1) can be written for the observed pixel color for each camera image as:

$$I_o^{(1)} = \alpha I_g + (1 - \alpha)I_s^{(1)} \qquad (2)$$

$$I_o^{(2)} = \alpha I_g + (1 - \alpha)I_s^{(2)} \qquad (3)$$

where parameter $\alpha$ is a surface parameter that models the reflectivity of the ground surface plane. If $\alpha = 1$ then there is no reflection at all, whereas, if $\alpha = 0$, then the ground surface is a perfect mirror. Equations (2) and (3) can be re-written as a solution for the color of the ground surface ($I_g$):

$$I_g = I_s^{(1)} + \frac{\left(I_o^{(1)} - I_s^{(1)}\right)}{\alpha} \qquad (4)$$

$$I_g = I_s^{(2)} + \frac{\left(I_o^{(2)} - I_s^{(2)}\right)}{\alpha} \qquad (5)$$

Without loss of generality, the following substitutions can be used:

$$E^{(1)} \equiv I_o^{(1)} - I_s^{(1)} \qquad (6)$$

$$E^{(2)} \equiv I_o^{(2)} - I_s^{(2)} \qquad (7)$$

$$\beta \equiv \frac{1}{\alpha}. \qquad (8)$$

Equations (6), (7) and (8) can be substituted into equations (4) and (5) to obtain:

$$I_g = I_s^{(1)} + \beta E^{(1)} \qquad (9)$$

$$I_g = I_s^{(2)} + \beta E^{(2)} \qquad (10)$$

It is noted that $E^{(1)}$ and $E^{(2)}$ are both based on color values measurable from the images 300a and 300b. As such, the only unknown values in this pair of equations are the color of the ground surface $I_g$ and the value for $\beta$. Solving equation (10) for $\beta$ and inserting it in the equation (9) gives:

$$I_g = \frac{I_s^{(1)} - \dfrac{I_s^{(2)}}{E^{(2)}}}{\left(1 - \dfrac{E^{(1)}}{E^{(2)}}\right)} \qquad (11)$$

Thus, for two views, the ground surface lightness/color can be solved in closed form. The resulting color $I_g$ is the ground surface color with the reflection removed. It can therefore be used to generate a single (view invariant) texture for the ground surface geometry. Note that non-specular reflection contributions may still be present in the result. Non-specular reflections will be dealt with below.

For multi-view imaging, it is likely that more than two cameras will be imaging the scene. Thus, for k = [1, ⋯, N] input views, the reflection model can be written as:

$$I_s^{(k)} = -\beta E^{(k)} + I_g \tag{12}$$

Equation (12) is a standard linear regression problem of the form y = ax + b. Thus, for example, a maximum likelihood estimation of $\beta$ and $I_g$ under a Gaussian error assumption can be solved directly (i.e. non-iteratively).

So far, it has been assumed that the scene geometry is known a-priori and without (large) errors. This is usually a reasonable assumption for the ground surface and hence the position of where to find the observed pixel color $I_o^{(k)}$ in view k. After extrinsic calibration of the N input views, for instance with existing Structure from Motion (SfM) techniques, the resulting point cloud can be used to fit a ground surface. To do this, typically, a-priori knowledge of the height of cameras above the ground surface can be used to define a pivot point for plane fitting. As an alternative, a ground surface plane can be fit using a direct image based multi-view error metric in combination with a start position and an iterative search procedure.

Given knowledge of the positions of the 3D ground surface point and the 3D background point in the scene, the pixel defining the source light $I_s^{(k)}$ in view k can be found. However, the background geometry may be less well known or available with less accuracy than the ground surface. Describing the background scene geometry with a single plane may therefore be too simple and, thus, relatively inaccurate. A solution may be to account for uncertainty of background depth in the equations to be solved.

Fig. 4 shows a cross section of a scene with three candidate background walls 106a, 106b and 106c. By tracing the ray from each camera via the ground floor 104 at point 108, reflecting with the same angle towards the background, multiple candidate light source positions 110a, 110b and 110c can be identified, each corresponding to different background walls 106a, 106b and 106c with different depth values (relative to the camera 102).

In practice, the background wall may not be flat. However, the different background walls 106a, 106b and 106c at different depth value provides a solution for the depth variation in the background.

The reflection model from equation (12) can thus generally be extended to:

$$I_s^{(k)} = -\beta_1 E_{z_1}^{(k)} \cdots - \beta_m E_{z_m}^{(k)} + I_g \tag{13}$$

$$E_{z_1}^{(k)} \equiv I_o^{(k)} - I_{s,z_1}^{(k)} \tag{14}$$

where there are m fixed depth levels for where the background depth $z_m$ could be.

The background depth can hence deviate somewhat from a nominal model. This is a well-known multi-linear regression problem with m explaining variables. Like the linear regression problem, it can be solved using existing non-iterative methods.

Equation (13) quickly becomes underdetermined due to the fact that the number of depth values to test can easily exceed the number of views k. However, this problem can be solved as explained below.

So far, equation (13) applies to a single pixel of the images. However, it is reasonable to assume that the reflection properties of the ground surface are rather constant over space due to constant material properties. This means that two adjacent pixels in the same view should have the same solution for $\beta_m$ since the adjacent pixels must also correspond with a very similar background depth $z_m$. This then allows the construction of a local set of equations for a group of pixels around a given pixel in a source view, wherein the equations share the value $\beta_m$. For a window of 3x3 pixels around a center pixel in a source view, it is possible to construct nine equations. Combined with 8 different views, this gives 72 equations. One could then e.g., select 10 depth values around the background model depth and still be able to solve the overdetermined system of equations provided in equation (13).

A point on the ground surface model is typically not visible in all views since objects, such as sports athletes, present on that same ground surface may occlude points in each view. To deal with this, multi-view depth estimation typically precedes the removal of the reflections. Depth pixels of objects that extend above the ground surface can be mapped onto the ground surface to determine, for each view, whether a ground surface point is visible. If the ground surface point is not visible, the corresponding equation can be dropped from the system of equations.

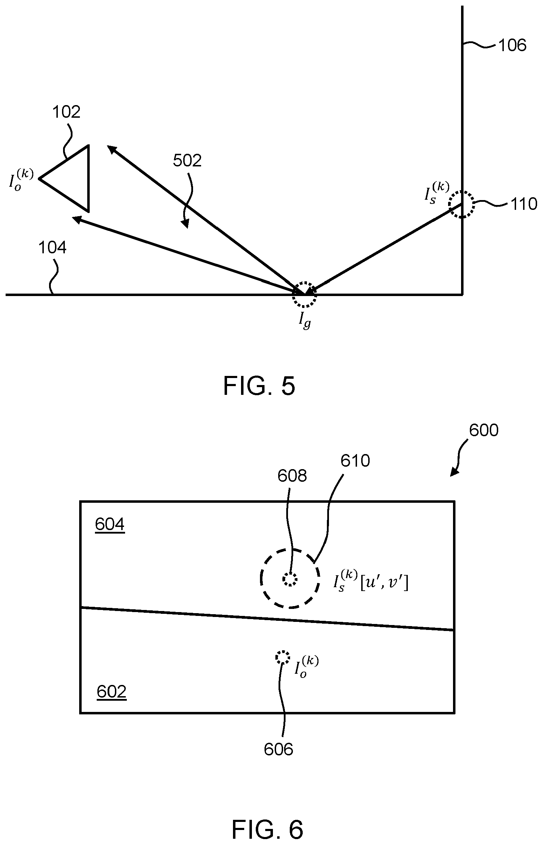

In many situations the ground surface will not be a perfect mirror. Fig. 5 shows a cone 502 of possible trajectories of light diffused at the ground surface 104. This is typically known as diffusion reflection or non-specular reflection. This means that multiple background light sources may contribute to the observed color $I_o^{(k)}$ of the ground surface point. In order to deal with this, the reflectivity model for k views can now be described as:

$$I_0^{(k)} = \alpha I_g + (1 - \alpha) \sum_{u-\frac{\Delta}{2}}^{u+\frac{\Delta}{2}} \sum_{v-\frac{\Delta}{2}}^{v+\frac{\Delta}{2}} f(u', v' | \sigma) I_s^{(k)}[u', v'] \qquad (15)$$

where a 2D kernel of $\Delta$ pixels is used around the background point 110 that would correspond with the ideal specular ray and off-axis rays are weighted less via a Gaussian function $f$ depending on angular deviation from the specular ray. Kernel size $\Delta$ [pixel] is typically adjusted to the Gaussian spread parameter $\sigma$. A large value of $\sigma$ is used when the ground surface deviates more from a pure specular surface. This parameter can be fixed a-priori or fitted with the least squares procedure.

Fig. 6 shows an image 600 with a specular light source pixel 608 and multiple non-specular light source pixels 610 on the background wall 604. Light from the specular light source pixel 608 reflects directly from the point 606 on the ground surface 602 towards the camera. Meanwhile, light from the non-specular light source pixels is expected to diffuse from the point 606 towards the camera. The larger the angle of diffusion, the lower the expected intensity of light which is reflected via diffusion. This is why equation (15) uses a Gaussian function dependent on angular deviation from the specular ray to approximate the contribution of the non-specular light source pixels 610 on the observed pixel $I_0^{(k)}$.

It may be that, for a particular view, the ground surface pixel 606 reflects light from a light source that is not observable in the image itself (e.g. covered an object). In that case, knowledge of the location, lightness and color of the light source (e.g. from other views) can be injected into the image.

Once the ground color $I_g$ has been determined for an observed pixel $I_0^{(k)}$, the color of the observed pixel can be changed to the ground color, thereby removing the reflections on the observed pixel. This can be done for each pixel of the ground surface to obtain an image without any reflections on the whole ground surface. Of course, reflections may occur in other objects other than the ground surface and the same methods described above can also be used to remove reflections from the other objects.

The removal of the reflections can be applied to the generation of a texture for a ground surface plane, where the texture is transmitted as an image or as video. Other objects, such as athletes, a ball and/or a basket may be transmitted as multi-view images with depth. Upon receiving the information, the rendering algorithm typically first draws the background, and the ground surface and then, in back to front order, performs patch-based rendering using multi view blending and compositing. The ground surface, with its reflections removed may be desirable. However, it may also be that reflection effects are still a desired effect due to its added realism.

Since the background texture and the scene geometry will also be present at the client side, the reflections can be re-applied to an arbitrary synthesized view using the reflection model:

$$I_0^{(k)} = \alpha I_g + (1 - \alpha) I_b. \qquad (16)$$

Note that a sprite background texture $I_b$ has now replaced the view dependent background term $I_s^{(k)}$. This is a reasonable assumption to make when the background is relatively far away from the cameras. The color $I_b$, and its associated depth, are available at the client side because they are needed during the rendering of a novel image at a target viewpoint. However, the value for reflectivity parameter $\alpha$ will now have to be transmitted. If $\alpha$ varies spatially, a reflectivity map can be used to reflect the $\alpha$ values for different positions on the scene. However, a single scalar value for $\alpha$ could also work.

Of course, it will be appreciated that having the ground surface without reflections could enable other computer graphics methods for adding reflections. The particular methods used may depend on the available processing resources for synthesis of the image.

In practice, when synthesizing an image at a target/novel viewpoint, the pixels from object textures received (e.g. images, texture patches, ground/background models etc.) are warped to the novel viewpoint. This is achieved using the geometry of the scene. For example, a depth map can be used to warp the pixels by un-projecting the pixels to a common co-ordinate system and re-projecting the pixels to the target viewpoint. Meshes or known depth layers for patches can also be used.

The background texture $I_b$ can be identified by tracing a ray from the novel viewpoint towards the ground. A reflection of the ray can be simulated where the ray reflects from the ground at the same angle as the incident ray from the novel viewpoint to the ground. When the reflected ray intersects a (non-transparent) pixel, this indicates that light emitted and/or reflected from the corresponding object would be reflected by the ground and seen at the target viewpoint. As such, reflections can be added to the ground (or other objects) which are appropriate when seen from any novel viewpoint.

Reflections of other objects (e.g., athletes) on the ground surface can be dealt with in a similar way as the background. The geometry of these objects (e.g. using a depth map or depth layers) relative to the scene is also transmitted to render these objects. Thus, reflections from these objects on e.g., the ground can be added after rendering these objects.

Advantageously, the reflections from a background object can be added first (e.g. before rendering foreground object). This means that reflections only need to be simulated for the background object(s) which typically cause more reflections than foreground objects (e.g. consider the reflection of the sky on a body of water). Thus, the foreground objects can be added afterwards. This essentially separates the synthesis of the image into the rendering of the ground/background (with reflections) and the rendering of the foreground objects (e.g. without reflections).

Of course, in some cases, it may be preferable to also add the reflections of some (or all) foreground objects. This would require more processing resources. This can be done after the foreground objects are rendered. In some cases, the reflections of the foreground objects may replace the reflections of the background.

A rendering algorithm for synthesizing an image at a new viewpoint could perform the following steps to add reflections:

- Draw the background sprite texture using its mesh or depth map;
- Draw the ground surface texture using its mesh or depth map;
- Add reflections induced by the background texture to the ground surface pixels;
- Draw objects (athletes, ball, etc.) that extend above the ground surface; and
- Add reflections induced by these objects to the ground surface pixels.

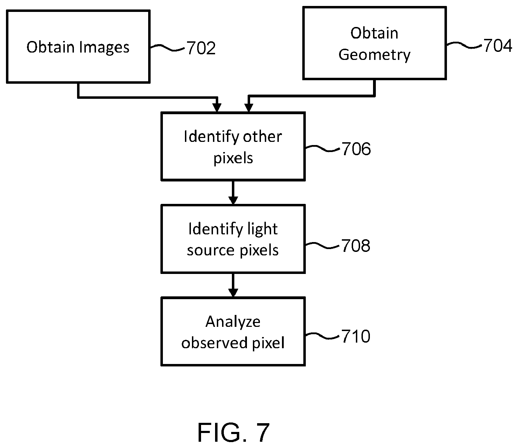

Fig. 7 shows a method for removing reflections from an image. Step 702 comprises obtaining multiple images of a scene from different viewpoints. At least two images from different viewpoints are used. Step 704 comprises obtaining the geometry of the scene. This can be obtained, for example, using structure from motion algorithms on the images and/or by using depth maps obtained from depth sensors. A depth map could also be obtained via disparity estimation between the images.

Steps 706, 708 and 710 are performed on a per-pixel basis. In other words, the following steps can be performed on various different pixels for each image.

Step 706 involves identifying corresponding pixels which correspond to the same position in the scene. In particular, an observed pixel in an image may be chosen and then the corresponding pixels are identified in the other images. In the examples provided above, the observed pixel and the corresponding pixels are described as $I_0^{(k)}$ for k views. Corresponding pixels can be identified for all of the images using the geometry of the scene and knowledge of the position of the cameras. Structure from motion algorithms can be used to obtain both the position of the cameras and the geometry of the scene.

Step 708 involves identifying light source pixels. Light source pixels are pixels which deliver light towards the observed pixels (and the corresponding pixels) in such a way that the delivered light is reflected towards the camera. Delivering light may involve emitting light directly towards the ground (e.g. a light bulb) or already-reflected light, which is further reflected by the ground surface. For specular reflections, the angle of a ray between the light source pixel and the observed pixel is the same as the angle of a ray between the observed pixel and the camera (as shown in Fig. 1). As previously discussed, specular and non-specular reflections can be modelled.

Step 710 involves analyzing the color of the observed pixel (and the corresponding pixels) in relation to the color of the light source pixels for the different views to obtain an adapted texture value (referred to as $I_g$ in the examples above) with reflections removed. Equations (12), (13) and (15) provide examples of how to obtain the adapted texture value $I_g$. The adapted texture value for various pixels in the image can be used to generate an object texture with the reflections removed. The object texture can thus be transmitted instead of patches of the object, with reflections, in the images.

When obtaining the adapted texture value, the reflectivity of the ground surface is also typically obtained. As such, the reflectivity of the ground can be transmitted with the object texture and depth (e.g., as metadata).

The object texture, depth and reflectivity can be used to synthesize an image at a target viewpoint. This could be achieved by using conventional image synthesis (using texture and depth) and adding the reflections to the newly synthesized image with conventional computer graphics methods. However, this would add significant delay to the generation of the image.

For immersive video applications and broadcasting, frame rates are an important factor in the viewing experience. As such, in these cases, the additional processing time required to add the reflections could significantly affect the viewing experience by lowering the frame rate. This is a particularly significant problem when using, for example, mobile devices with limited processing resources.

Thus, it is proposed to synthesize a novel image at a target viewpoint in two separate steps. In the first step, two object textures are rendered at the target viewpoint. This is achieved by adding the texture values (e.g. color and transparency pixel values) to the novel image from the target viewpoint.

Methods for rendering objects at a target viewpoint will be known. For example, this can involve using a geometry of the scene (e.g. a depth map, planes at various depths etc.) to warp the texture of the objects from their source viewpoint (e.g. the viewpoint of the camera which obtained the color values of the objects) to a target viewpoint. More generally, the geometry provides a 3D position for the texture values of the object. In other words, the geometry enables one to find the depth of the pixels for the objects relative to the target viewpoint.

Continuing in the first step, reflections of the second object texture, on the first object texture, are simulated. The amount of reflection on the first object texture is based on a reflectivity value of the first object texture. Of course, a spatially varying reflectivity map could be used (e.g. having a per-pixel reflectivity value).

In most cases, the first and second object textures would be a ground surface and a background surface respectively. This is because it is expected that the ground surface in most scenes will have the most noticeable reflections and these reflections are typically caused by light reflecting from, or being emitted from, the background of the scene.

For example, consider the floor of a basketball court (i.e. the ground surface), which is relatively reflective, with various light sources illuminating the court (i.e. the background). In this case, the basketball court would act as the ground surface which reflects light from the various light sources around the court. The various light sources would act as the background.

However, the first object texture more generally includes any one or more objects to which one wishes to add reflections and the second object texture more generally includes any one or more objects which cause reflections on the object(s) included in the first object texture.

It will be appreciated that simulating reflections from a second object texture on a first object texture is much less computationally intensive than simulating reflections for a whole scene (e.g. with multiple foreground objects). It will also be appreciated that, when reflections are simulated on the first object texture, the texture values (including color) of the first object texture will be adapted to some combination of the original texture values and the texture values of the second object texture. The particular combination depends on the reflectivity value(s) of the first object texture.

In the second step, a third object texture is added to the image over the first object texture. This can be achieved by rendering the third object texture over the first object texture (now with reflections). Generally, the third object texture will likely mostly include foreground objects. Thus, any "object texture" may include multiple objects. For instance, in the previous basketball court example, the third object texture could include basketball players, the ball and/or the hoops. Of course, more than one foreground object could be included in the third object texture.

It will be appreciated that the third object texture is not limited to only foreground objects and may include elements of the background/ground surfaces for which reflections are not required.

As such, this enables a novel image to be synthesized at a target viewpoint with reflections which accurately reflect the target viewpoint itself and does not require as much computational resource as conventional methods for simulating reflections.

Of course, for a more natural and accurate image, reflections from the foreground objects (i.e. included in the third object texture) can be added to the ground surface (i.e. the first object texture) as well. This may depend on the available computational resources and, for example, a target frame rate. As such, the foreground objects could be divided into a third object texture, for foreground objects one wishes to add reflections of, and a fourth object texture for foreground object one does not wish to add reflections for. Similarly, each foreground object could have its own, separate, object texture.

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method for removing reflections from an image, the method comprising:

   obtaining (702) two or more images of a scene from one or more image sensors;
   obtaining (704) a geometry of the scene providing the positions in the scene corresponding to the pixels in the images; and
   for one or more observed pixels in the images, adapting the values of each observed pixel by:

   identifying (706) corresponding pixels in the other images which correspond to the same positon in the scene as the observed pixel;
   identifying (708) light source pixels, corresponding to positions in the scene at which a light source is delivering light to the position in the scene which corresponds to the observed pixel and the corresponding pixels, by using the geometry of the scene and the positions of the image sensors relative to the positions of the observed pixels and the corresponding pixels; and
   analyzing (710) texture values of the observed pixel, and the corresponding pixels, and the light source pixels, to obtain an adapted texture value with reflections removed for the observed pixel.

2. The method of claim 1, wherein adapting each observed pixel further comprises:

   tracing rays from the position of the image sensors to the corresponding observed pixel or the corresponding pixels; and
   simulating the reflection of the rays from the observed pixels or the corresponding pixels,
   wherein identifying light source pixels for the observed pixel and the corresponding pixels comprises identifying the one or more pixels intersected by the reflected rays.

3. The method of claim 1 or 2, wherein adapting each observed pixel further comprises analyzing the texture values of one or more pixels, adjacent to the observed pixel, and the corresponding light source pixels, together with the observed pixel of the same image, with the assumption that the adjacent pixels comprise similar visual properties as the observed pixel.

4. The method of any one of claims 1 to 3, wherein identifying light source pixels comprises:

   identifying specular light source pixels corresponding to positions in the scene at which a light source is delivering light to the position in the scene which corresponds to the observed pixel, and corresponding pixels, and said light is being reflected to the position of the corresponding image sensor; and
   identifying non-specular light source pixels adjacent to, or near, the light source pixels, wherein the non-specular light source pixels correspond to positions in the scene at which a light source is delivering light to the position in the scene which corresponds to the observed pixel and said light is expected to be diffused towards the position of the corresponding image sensor,
wherein analyzing the texture values of the light source pixels comprises analyzing the texture values of both the specular light source pixels and the non-specular light source pixels.

5. The method of any one of claims 1 to 4, wherein obtaining the geometry of the scene and the position of the image sensors comprises using a structure from motion algorithm on the two or more images.

6. The method of any one of claims 1 to 5, wherein obtaining a geometry of the scene comprises iteratively fitting one or more surfaces to one or more objects present in the two or more images.

7. The method of any one of claims 1 to 6, further comprising generating an object texture for an object in the scene using the adapted texture values of the observed pixels corresponding to the object.

8. The method of claim 7, further comprising generating a reflectivity map for the object based on the texture values of the observed pixels compared to the corresponding adapted texture values.

9. The method of claim 8, further comprising transmitting the object texture and the reflectivity map for virtual view synthesis.

10. A method for synthesizing an image at a target viewpoint, the method comprising:

receiving a first object texture, a reflectivity value for the first object texture and a second object texture, wherein the first and second object textures correspond to objects in a scene;
receiving a geometry of the scene corresponding to the first and second object textures;
synthesizing the image with the first and second object textures at the target viewpoint using the geometry of the scene;
simulating reflections on the first object texture based on the reflectivity value and the texture values of the second object texture; and
receiving a third object texture and adding the third object texture over the first object texture with simulated reflections to synthesize the image at the target viewpoint.

11. The method of claim 10, further comprising receiving a reflectivity map comprising a plurality of reflectivity values for the plurality of pixels of the first object texture.

12. The method of claims 10 or 11, further comprising simulating reflections on the first object texture based on the reflectivity value and the texture values of the third object texture.

13. A computer program product comprising computer program code which, when executed on a processor, cause the processor to perform all of the steps of the method according to any of claims 1 to 9 and/or all of the steps of the method according to any of claims 10 to 12.

14. A processor configured to execute the computer program code of claim 13.

15. A computer-readable data carrier carrying the computer program code of claim 13.

FIG. 1

FIG. 2

300a

304

$I_S^{(1)}$

$I_o^{(1)}$

302

300b

304

$I_S^{(2)}$

$I_o^{(2)}$

302

FIG. 3

106a

106b

106c

102

$I_o^{(k)}$

$I_{s,z_m}^{(k)}$

110a

110b

110c

104

108

$I_g$

FIG. 4

106

102

$I_o^{(k)}$

502

$I_s^{(k)}$

110

104

$I_g$

## FIG. 5

600

608    610

604

$I_s^{(k)}[u', v']$

$I_o^{(k)}$

602

606

## FIG. 6

FIG. 7

Europäisches
Patentamt

European
Patent Office

Office européen
des brevets

# EUROPEAN SEARCH REPORT

Application Number

EP 22 21 0429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIZHOU YU ET AL: "Inverse global illumination", COMPUTER GRAPHICS PROCEEDINGS. SIGGRAPH 99; [COMPUTER GRAPHICS PROCEEDINGS. SIGGRAPH], ACM ? – NEW YORK, NY, USA, 1515 BROADWAY, 17TH FLOOR NEW YORK, NY 10036 USA, 1 July 1999 (1999-07-01), pages 215-224, XP058128795, DOI: 10.1145/311535.311559 ISBN: 978-0-201-48560-8 * abstract * * sections 1, 3-6 * * figures 1, 2, 3, 6 * ----- | 1-9, 13-15 | INV. G06T7/00 G06T15/50 |
| X | EP 3 144 898 A1 (THOMSON LICENSING [FR]) 22 March 2017 (2017-03-22) * paragraph [0014] – paragraph [0056] * ----- | 1-9, 13-15 | |
| X | SATO Y ET AL: "OBJECT SHAPE AND REFLECTANCE MODELING FROM OBSERVATION", COMPUTER GRAPHICS PROCEEDINGS. SIGGRAPH 97. LOS ANGELES, AUG. 3 – 8, 1997; [COMPUTER GRAPHICS PROCEEDINGS. SIGGRAPH], READING, ADDISON WESLEY, US, 3 August 1997 (1997-08-03), pages 379-387, XP000765838, ISBN: 978-0-201-32220-0 * 2-4.5.2 * ----- | 1-9, 13-15 | TECHNICAL FIELDS SEARCHED (IPC) G06T |

The present search report has been drawn up for all claims

| Place of search | Date of completion of the search | Examiner |
|---|---|---|
| Munich | 5 July 2023 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

Europäisches
Patentamt

European
Patent Office

Office européen
des brevets

**Application Number**

**EP 22 21 0429**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-9(completely); 13-15(partially)**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
1. claims: 1-9(completely); 13-15(partially)

   See the annexed provisional opinion accompanying the partial
   search results (EPO Form 1707)
                           ---


2. claims: 10-12(completely); 13-15(partially)

   See the annexed provisional opinion accompanying the partial
   search results (EPO Form 1707)
                           ---
```

## ANNEX TO THE EUROPEAN SEARCH REPORT
## ON EUROPEAN PATENT APPLICATION NO.

EP 22 21 0429

This annex lists the patent family members relating to the patent documents cited in  the above-mentioned European search report.
The members are as contained in the European Patent Office EDP file on
The European Patent Office is in no way liable for these particulars which are merely given for the purpose of information.

05−07−2023

| Patent document cited in search report | | Publication date | Patent family member(s) | | Publication date |
|---|---|---|---|---|---|
| EP  3144898 | A1 | 22−03−2017 | EP | 3144898 A1 | 22−03−2017 |
|  | | | US | 2017084075 A1 | 23−03−2017 |

EPO FORM P0459